# EUROPÄISCHE PATENTSCHRIFT

(11) **EP 2 089 457 B1**
(45) Veröffentlichungstag und Bekanntmachung des Hinweises auf die Patenterteilung: **16.02.2011**
(21) Anmeldenummer: 07856540.5
(22) Anmeldetag: 11.12.2007
(51) Int. Cl.: C08J 5/18

(54) **VERFAHREN ZUR HERSTELLUNG PORÖSER FOLIEN UND DARAUS HERGESTELLTES FOLIENMATERIAL**
PROCESS FOR PRODUCING POROUS FILMS AND FILM MATERIAL PRODUCED THEREFROM
PROCÉDÉ DE FABRICATION DE FEUILLES POREUSES ET MATÉRIAU EN FEUILLE PRÉPARÉ À PARTIR DE CELLES-CI

(30) Priorität: 15.12.2006 DE 102006059860
(43) Veröffentlichungstag der Anmeldung: 19.08.2009
(73) Patentinhaber: EWALD DÖRKEN AG, 58313 Herdecke (DE)
(72) Erfinder: SCHRÖER, Jörn, 58313 Herdecke (DE)
(74) Vertreter: Gesthuysen, Michael
(86) Internationale Anmeldenummer: PCT/EP2007/010783
(87) Internationale Veröffentlichungsnummer: WO 2008/071383

(56) Entgegenhaltungen:
- WO-A-00/34384
- WO-A-02/089955

## Beschreibung

Die Erfindung betrifft ein Verfahren zur Herstellung poröser Folien nach dem Oberbegriff des Anspruchs 1 und ein nach dem vorgenannten Verfahren hergestelltes poröses Kunststoffmaterial als solches.

Ein Verfahren der vorgenannten Art ist bereits aus der US 2004/0213986 A bekannt. Bei dem bekannten Verfahren werden poröse Folien dadurch hergestellt, dass eine Kunststoffolie mit diskreten Domänen einem Feld ausgesetzt wird, das die Domänen selektiv erwärmt, so dass in der Kunststoffmatrix im Bereich der Domänen Poren erzeugt werden. Die Porosität der bekannten Folie wird durch die Menge des eingelagerten porenbildenden Materials gesteuert.

Aus der WO 02/089955 A geht außerdem bereits ein Verfahren zur Herstellung poröser Folien hervor. Dabei werden die porösen Folien durch Verstrecken hergestellt. Die Anregung von Domänen ist dabei nicht vorgesehen.

Die Herstellung poröser Folien ist im übrigen auch aus der Praxis bekannt. Poröse Folien werden unter anderem dadurch hergestellt, dass das Bahnmaterial mit heißen oder kalten Nadeln mechanisch perforiert wird. Eine andere Art der Herstellung besteht in dem sogenannten offenzelligen Schäumen.

Ein Spezialfall der porösen Folien sind solche Folien, die eine gewisse Wasserdichtigkeit aufweisen, aber gegenüber Wasserdampf durchlässig sind. Derartige Folien werden üblicherweise als atmungsaktive Membranen bezeichnet. Solche Folien benötigen genügend kleine Poren, die üblicherweise als mikroporös bezeichnet werden. Die Herstellung solcher Folien kann erfolgen durch
- offenzelliges Schäumen von Dispersionen
- Verstrecken mit Feststoffen hoch gefüllter Folien
- gezieltes Herauslösen von bestimmten Mischungsbestandteilen.

Derartige Folien können in verschiedensten Bereichen eingesetzt werden, z.B.
- im Baubereich, insbesondere bei Dach- und Fassadenkonstruktionen,
- bei Bekleidung, insbesondere Textilien, Schutzbekleidung und Schuhen,
- in Batterieseparatoren,
- als Membranen in Brennstoffzellen,
- bei oder als Verpackungen,
- in der Hygieneindustrie, insbesondere bei Windeln, und
- in der Medizintechnik und insbesondere im Bereich der medizinischen Bekleidung.

Bei bestimmten Anwendungen, wie z.B, bei der Gasfiltration oder auch in Brennstoffzellen, werden ebenfalls atmungsaktive Membranen eingesetzt, wobei jedoch sehr feine Poren erforderlich sind.

Problematisch bei den bekannten Verfahren ist es, die Porengröße und die Porenanzahl in der Membran gezielt zu kontrollieren und dabei gleichzeitig ein wirtschaftliches Verfahren zur Herstellung derartiger Folien zur Verfügung zu stellen.

Aufgabe der vorliegenden Erfindung ist es, ein Verfahren zur Herstellung poröser Folien der eingangs genannten Art zur Verfügung zu stellen, das sich dafür eignet, Porengröße und -zahl auf einfache Weise einstellen zu können, und das gleichzeitig wirtschaftlich sein soll.

Zur Lösung der vorgenannten Aufgabe ist bei einem Verfahren der eingangs genannten Art vorgesehen, dass das Folienmaterial während oder nach der Anregung und der sich dadurch ergebenden Erwärmung der Domänen gedehnt oder verstreckt wird. Die Dehnung oder Verstreckung kann je nach Einsatzfall mono- oder biaxial erfolgen. Da die Folie im Bereich der Domänen stärker erwärmt worden ist als in den übrigen Bereichen, führt das Verstrecken zu einem Aufreißen des Folienmaterials bzw, der Matrix im Bereich der Domänen, so dass sich Poren ausbilden, die an den Grenzflächen der Domänen entstehen oder sich durch die Domänen erstrecken. Dabei wird die Größe der Poren durch den Grad und die Art der Verstreckung gesteuert.

Bei der Erfindung wird ein heterogener Werkstoff mit diskreten Domänen als Ausgangsmaterial für die Folie verwendet, so dass die Domänen in der Matrix vorgesehen sind, dass die Folie insgesamt einem Feld zur selektiven Anregung der Domänen ausgesetzt wird, dass die Domänen durch die Anregung selektiv erwärmt werden und dass die Poren in den Domänen oder im Bereich der Domänen erzeugt werden. Vorrichtungsgemäß ist bei dem erfindungsgemäßen Kunststoffmaterial vorgesehen, dass in der Matrix im wesentlichen diskrete Domänen vorgesehen sind, so dass sich ein heterogenes Bahnmaterial ergibt, dass die Domänen in einem Feld selektiv angeregt worden sind, so dass sich die Domänen zumindest bereichsweise und/oder die den Domänen benachbarten Bereiche erwärmt haben, und dass die Poren in den oder im Bereich der Domänen vorgesehen sind. Bei der Erfindung ist es also so, dass die Anregung der Domänen jeweils selektiv gegenüber dem oder relativ zum Rest der Matrix erfolgt. Dies bedeutet, dass bei Aussetzen der Folie in einem gemeinsamen Anregungsfeld die Domänen stärker erwärmt werden als die Restmatrix. Dies hat wiederum zur Folge, dass die Matrix bzw. die Restmatrix von den Domänen anwendungstechnisch entkoppelt wird und sich hierüber die Eigenschaften der Folie so sehr gut steuern lassen.

Es ist darauf hinzuweisen, dass mit Domänen sowohl bestimmte selektive räumliche Bereiche in der Folie bzw. der Matrix gemeint sind, als auch bestimmte Partikel, Füllstoffen, Porenbildner oder dergleichen. Weiter ist darauf hinzuweisen, dass die Erzeugung der Poren im Bereich der Domänen vor allem meint, dass sich die Poren unmittelbar an die Domänen anschließen bzw. diesen benachbart sind. Bevorzugt bilden sich dabei die Poren an den Grenzflächen der Domänen aus, worauf nachfolgend noch näher eingegangen wird. In jedem Fall ermöglicht es die vorliegende Erfindung, sowohl die Porengröße als auch die Porenanzahl gezielt bei der Herstellung der Folie durch die Auswahl entsprechender Domänen zu kontrollieren. So lassen sich sowohl vergleichsweise große Poren ausbilden, als auch sehr feine Poren, die für bestimmte Anwendungsfälle erforderlich sind,

Im übrigen bietet die vorliegende Erfindung auch die Möglichkeit, ein poröses Folienmaterial, das nach dem erfindungsgemäßen Verfahren hergestellt worden ist, erneut einem Anregungsfeld auszusetzen, so dass sich nochmals eine Beeinflussung der Domänen und damit der Poren ergibt. So ist es grundsätzlich sogar möglich, im nachhinein nach entsprechender Anregung der Domänen die ursprünglichen Poren wieder zu schließen, und zwar dadurch, dass die Domänen so stark angeregt werden und sich derart erwärmen, dass das Folienmaterial schmilzt und die ursprünglich hergestellten Poren wieder verschließt. Die Erfindung stellt damit letztlich auch ein Verfahren zur Verfügung, bei dem die Poren eines porösen Kunststoffmaterials im nachhinein wieder verschlossen werden. In einer weiteren Variante können die Poren im Nachgang wenigstens noch einmal vergrößert werden, indem z. B. wenigstens eine weitere Anregung mit gleichzeitiger Verstreckung erfolgt.

Im übrigen versteht es sich, dass das erfindungsgemäße Prinzip sich auch auf Ausführungsformen bezieht, bei denen nicht die Domänen sondern die Matrix mit Ausnahme der Domänen selektiv, d. h. separat und auch anders als der Rest der Folie, angeregt wird. In diesem Falle wird dann die Matrix mit Ausnahme der Domänen selektiv durch die Anregung erwärmt, nicht jedoch die Domänen, wobei die Poren in der Matrix oder aber im Bereich des Übergangs von der Matrix zu den Domänen erzeugt werden. Es handelt sich also um eine zu der vorgenannten Ausführungsform komplementäre Ausführungsform, die nicht nur verfahrensgemäß möglich ist, sondern sich auch auf das Folienmaterial als solches bezieht. Es wird ausdrücklich darauf hingewiesen, dass die nachstehenden Ausführungen, die die Ausführungsform der selektiven Anregung der Domänen betreffen, sich in gleicher Weise auf die selektive Anregung der Matrix beziehen, auch wenn hierauf im einzelnen nicht näher eingegangen wird.

Damit die nach dem erfindungsgemäßen Verfahren bevorzugt hergestellten Folien eine über die Fläche zumindest im wesentlichen homogene oder gleichmäßige Porosität haben, sind die Domänen gleichmäßig in der Folie bzw. Matrix verteilt, Daneben kann auch vorgesehen sein, dass die Domänen ungleichmäßig verteilt sind. Hieraus lassen sich dann Folien mit definierten Bereichen unterschiedlicher Porosität herstellen.

Bei einer anderen Ausführungsform, die alternativ zur Verstreckung oder aber auch in Verbindung mit der Verstreckung angewendet werden kann, ist in oder auf den Domänen ein porenbildendes Material (Porenbildner) vorgesehen, bei dem es sich vorzugsweise um sich im wesentlichen zersetzendes Treibmittel oder ein sich bei der Anregung im wesentlichen verdampfendes Coating handeln kann.

Bei Verwendung des Treibmittels ergibt sich nach der Anregung im Bereich der Domäne eine Art Gasblase, was bei entsprechend großen Domänen bereits zur Porenbildung führen kann. Bei durch die Anregung im wesentlichen verdampfenden Coatings bildet sich an den Domänen eine äußere Grenzschicht, die bei entsprechend großen Domänen ebenfalls bereits zu einer Porenbildung führen kann.

Von besonderem Vorteil ist es, wenn die Porosität zum einen durch den Einsatz von Treibmittel/Coating und zum anderen durch die zusätzliche Verstreckung erzeugt wird. Hierbei kann die Porosität in einem sehr weiten Rahmen eingestellt werden. Letztlich wird die Größe und/oder die Anzahl der Poren im Folienmaterial durch viele Faktoren beeinflusst. Dabei spielen neben dem Grad und der Art der Verstreckung unter anderem folgende Faktoren für sich oder in beliebiger Kombination miteinander eine Rolle:
- Art der Domänen,
- Anzahl der Domänen,
- Temperatur des Folienmaterials,
- Zeitpunkt der Anregung innerhalb des Herstellungsprozesses,
- Art des Matrixmaterials
- Dauer der Anregung,
- Intensität der Anregung,
- Art des Treibmittels/Coatings,
- Menge des Treibmittels/Coatings.

Es wird darauf hingewiesen, dass die vorstehende Aufzählung nicht abschließend ist.

Wichtig bei den Treibmitteln/Coatings sind deren Zündtemperatur, die auf das Folienmaterial bzw. die Matrix, in die die Domänen eingebettet sind, abgestimmt werden muss. Im Gegensatz zu der herkömmlichen Verarbeitung von treibmittelhaltigen Kunststoffen zu geschäumten Folien kann die Zündtemperatur in einem breiteren Temperaturbereich, insbesondere höher gewählt werden, da die benötigte Temperatur selektiv und gezielt erzeugt werden kann. Interessante Eigenschaften in diesem Zusammenhang sind die Gasausbeute und die Löslichkeit des Treibmittels/Coatings in der Matrix. Bevorzugte Treibmittel/Coatings, deren ungefähre Zündtemperatur nachfolgend in Klammern angegeben ist, sind:
- Azoverbindungen, wie z.B. Azodicarbonamide (210°C), Azoisobutylronitril,
- Tetrazole, wie z.B. 5-Phenytetrazol (245°C),
- Triazine, wie z.B. Trihydrazinotriazin (275°C),
- Carbonsäuren, wie z.B. Zitronensäure (150°C), Oxalsäure, Glutarsäure,
- Wasserabspaltende Substanzen, wie Aluminiumhydroxid (220°C), Magnesiumhydroxid (350°C), Aluminiumnitrat, Sulfohydrazine, Natrium(hydrogen)carbonat, Semicarbazide

Verschiedene Treibmittel, insbesondere Azodicarbonamide, aber auch Zitronensäure und die Hydroxide von Aluminum und Magnesium, sind wenig löslich in vielen verwendeten Matrixpolymeren und bleiben daher bevorzugt an den Domänenpartikeln. Gegebenenfalls können diese auch mikroverkapselt werden.

Als Coatings, die sich bei Anregung teilweise zersetzen und überwiegend verdampfen und dabei eine Trennschicht im Bereich der bzw. an der Grenzfläche der Domänenpartikel bilden, werden bevorzugt niedermolekulare Substanzen eingesetzt, Diese Coatings werden auf den Domänen absorbiert oder in ihnen gelöst. Beispiele derartiger Coatings sind
- Wachse, wie z.B. Paraffinwachse, Amidwachse oder Esterwachse
- Öle wie z.B. Silikonöle, Paraffinöle, Fettsäureöle oder Fette.

Sofern das Treibmittel oder Coating auf einem Füllstoff vorgesehen bzw. dieser damit beschichtet ist, ist es günstig, die Oberfläche des Füllstoffs zu modifizieren, um eine bessere Dispergierung oder Anbindung des Treibmittels oder Coatings zu erhalten.

Von besonderem Vorteil ist es, wenn die Anregung der Domänen in dem Feld kontaktlos erfolgt, insbesondere durch elektromagnetische Wellen. Hierdurch scheidet zum einen eine direkte mechanische Einwirkung auf die Folie aus, zum anderen lässt sich eine entsprechende Anregungs- bzw. Aktivierungseinheit problemlos an fast jeder beliebigen Stelle des Herstellungsprozesses anordnen. So können die Aktivierungseinheiten nach einem Mischextruder für das Ausgangsmaterial vor einer (Vor-)Gießwalze, vor einer Vorwärmzone und/oder vor einem Streckwerk vorgesehen sein. Grundsätzlich ist es sogar möglich, nach einem Streckwerk eine Aktivierungseinheit vorzusehen, und zwar dann, wenn mit einem Treibmittel gearbeitet wird und das Treibmittel zu einer solchen Gasbildung führt, dass sich ein Durchbruch des Folienmaterials bzw. der Matrix und damit die gewünschte Porosität ergibt.

Grundsätzlich gibt es verschiedene technische Möglichkeiten der kontaktlosen Anregung, wobei die Anregung durch elektromagnetische Wellen besonders bevorzugt ist. Eine bevorzugte Alternative ist die Anregung der Domänen durch Induktion, so dass sich eine Erwärmung der Domänen ergibt. Dabei versteht es sich, dass sich hierbei lediglich eine Erwärmung der Domänen oder im Bereich der Domänen ergibt, während die Matrix im übrigen nicht oder nur geringfügig erwärmt wird. Es bestehen also zwischen den Domänen und der Matrix erhebliche Temperaturdifferenzen aufgrund der Anregung, Im übrigen ist darauf hinzuweisen, dass unter der induktiven Anregung verstanden wird, dass das Folienmaterial bei oder nach der Herstellung oder während ihrer späteren Verarbeitung bzw. ihrem Einsatz durch ein Magnetfeld, ein elektrisches Feld oder ein elektromagnetisches Feld hindurchbewegt wird und sich dadurch die Anregung ergibt. Gleichzeitig wird hierunter auch das Anlegen einer Spannung verstanden, wenngleich dies nicht notwendigerweise kontaktlos erfolgen wird. Zu der induktiven Anregung gehört auch, dass die Domänen Füllstoffe aufweisen, die in die Matrix eingebettet sind. Diese Füllstoffe sind ferro-, ferri-, para- und/oder superparamagnetisch und/oder elektrisch leitfähig sowie im Falle der Anlegung einer elektrischen Spannung piezoelektrisch.

Als magnetische Füllstoffe kommen insbesondere Materialien bzw. Partikel aus der Gruppe bestehend aus Eisen, Eisenlegierungen oder eisenhaltigen Metalloxiden in Frage, z.B. Magnetit oder Mangan-Eisen-Oxid, insbesondere gamma-Fe₂O₃ oder Fe₃O₄ sowie Mischungen hiervon. In Frage kommen auch nanoskalige superparamagnetische Teilchen, wie beispielsweise Eisenoxid-Siliciumdioxid-Kompositpartikel. Im Zusammenhang mit dem Superparamagnetismus ist die Blocking-Temperatur zu beachten, unterhalb der kein paramagnetisches Verhalten auftritt. Die Blocking-Temperatur ist bevorzugt kleiner 250 K und besonders bevorzugt kleiner 305 K.

Als metallische Füllstoffe eignen sich insbesondere Aluminium, Zink, Kupfer, Edelstahl, Bronze, Silber oder Legierungen aus den vorgenannten Materialien, insbesondere Kupfer-Zink-Legierungen. Die Füllstoffe können in Form von Pulver oder Blättchen, flach oder als sogenannte Flakes, ausgebildet sein.

Als weitere Füllstoffe, die für die induktive Anregung in Frage kommen, eignen sich Polymere, die elektrisch leitfähig sind. Hierbei handelt es sich um undotierte oder dotierte Polymere mit durchgängig konjugierten Mehrfachbindungen. Insbesondere sind hier geeignet:
- Cis- oder trans-Polyacetylen (PA)
- Polyparaphenylen (PPP)
- Polythiophen
- Polypyrrol
- Poly(para-phenylen-vinylen) (PPV)
- Polyanilin (PANI)

Die Leitfähigkeiten der elektrisch leitfähigen polymeren Füllstoffe liegen im Bereich von 0,01 bis 1.000.000 S/m, wobei die undotierten eher im Bereich von 0,01 bis 100 S/m liegen. Die polymeren Füllstoffe sind nicht alle thermoplastisch bzw. haben sehr hohe Schmelzpunkte, so dass sie zum Teil ihre ursprüngliche Partikelform beibehalten.

Als für die induktive Anregung weiterhin geeignete Materialien sind Kohlenstoff-Nanoröhren und Kohlefasern zu nennen. Interessant sind hier insbesondere sogenannte Single-Wall- oder Multi-Wall-Kohlenstoff-Nanoröhren (Carbon Nanotubes, CNT) z.B. SWNT 90 Gew.-% oder MWNT 10-20 nm der Fa. Cheap-TubesInc. oder alternativ SWNT oder MWT kleiner 10 nm der Fa. NTP. Bei den Kohlefasern kommt z.B. das Produkt Torayca T010-3 der Fa. Toray oder geschnittenes Sigrafil C der Fa. SGL Carbon in Frage. Interessant sind auch vernickelte Kohlefasern, beispielsweise das Produkt Tenax-J MC HTA-12K A302 der Fa. Toho Tenax.

Im Zusammenhang mit der induktiven Anregung bietet es sich an, als Aktivierungseinheit wenigstens eine Spule oder bei hohen Frequenzen Laufzeit-Röhren wie z.B. Klystrons oder Magnetrons zu verwenden. Die Aktivierungseinheit sollte dabei eine Frequenz zwischen 30 Hz - 300 GHz, bevorzugt zwischen 0,3 - 300 GHz oder zwischen 10 kHz bis 300 MHz aussenden, gegebenenfalls verbunden mit einem Gleichstrom-Magneten zwischen 0,015 - 4 Tesla, bevorzugt zwischen 0,02 und 0,2 Tesla. Die Dauer der magnetischen Anregung sollte < 300 s, vorzugsweise < 60 s und insbesondere < 10 s sein. Weitere Parameter bei der magnetischen Anregung sind die Partikelgrößenverteilung, die Curie-Temperatur, die Permeabilität, der elektrische Widerstand und die Wärmekapazität. Diese Parameter sind wahlweise vom Fachmann in Abhängigkeit des jeweiligen Anwendungsfalls einzustellen.

Eine weitere Möglichkeit der Aktivierung besteht darin, die Domänen durch Strahlung, insbesondere durch Infrarot-Strahlung anzuregen, wobei das Folienmaterial in diesem Falle durch ein entsprechendes Strahlungsfeld hindurchbewegt wird. In diesem Zusammenhang weisen die Domänen dann Füllstoffe auf, die aus einem strahlungsabsorbierenden Material, insbesondere einem IR-Strahlung absorbierenden Material bestehen, wobei die Matrix aus einem nicht oder gegenüber den Füllstoffen geringer strahlungsabsorbierendem Material besteht. Grundsätzlich ist es auch möglich, dass die Folie wenigstens zwei unverträgliche Kunststoffe aufweist, von denen einer die Domänen bildet und wobei dieser Kunststoff Strahlung mit einer vorgegebenen Wellenlänge stärker absorbiert als der andere Kunststoff, der sogar grundsätzlich auch so ausgebildet sein kann, dass keine Infrarot-Strahlung absorbiert wird. Außerdem kann vorgesehen sein, dass die Folie wenigstens zwei unverträgliche Kunststoffe aufweist, wobei der Domänen-Kunststoff wenigstens eine Komponente aufweist, die Strahlung mit einem vorgegebenen Wellenlängenbereich absorbieret. Bei den vorgenannten strahlungsabsorbierenden bzw. entsprechend eingefärbten oder pigmentierten Kunststoffen handelt es sich um sogenannte Insel-Polymere, während die übrigen Polymere als Matrix-Polymere bezeichnet werden. Schließlich ist es im Zusammenhang mit der Strahlungsaktivierung auch möglich, dass die Domänen lediglich durch Treibmittel gebildet werden, wobei das Treibmittel strahlungsabsorbierend ist und sich nach der Aktivierung unter Gasbildung zersetzt.

Nachfolgend wird bezüglich der Strahlungsaktivierung lediglich auf Infrarot-strahlung eingegangen, wobei es grundsätzlich auch möglich ist, Strahlung mit anderen Wellenlängen zur Aktivierung einzusetzen. Die nachstehenden Ausführungen beziehen sich daher dem Grunde nach auch auf andere Wellenlängenbereiche.

In Verbindung mit der Infrarot-Aktivierung können als Aktivierungseinheiten entsprechende IR-Strahler, beispielsweise der Firma Heraeus Noblelight, eingesetzt werden. Beispiele sind hier:
- Infralight NIR-Strahler, vorrangig für den ganz kurzwelligen Bereich ca. 0,6 - 3 µm
- Short Wave-Strahler für den Bereich von 0,8 - 4,5 µm
- Carbon-Strahler für den Bereich von 1-6 µm.

Entsprechende Emitter-Spektren sind aus dem Stand der Technik bekannt.

Die Leistung der IR-Aktivierungseinheiten sollte größer 1 kW sein, bevorzugt zwischen 10 und 500 kW und besonders bevorzugt zwischen 20 und 200 kW liegen.

Als Anregungsparameter haben sich grundsätzlich folgende Werte als geeignet herausgestellt:
- Die Wellenlänge sollte zwischen 0,6 - 30 µm liegen, je nach Anwendung bevorzugt auch Teilbereiche davon. Die Teilbereiche werden mit Prismen oder bevorzugt optischen Gittern oder andern Filtern erzeugt.
- Die Anregungsdauer solide < 300 s, bevorzugt < 30 s und besonders bevorzugt < 5 s sein.
- Die Intensität sollte zwischen 0,5 kW/m² - 1 MW/m², bevorzugt zwischen 2 kW/m² - 300 W/m² liegen, wobei die Intensität bei kürzerer Wellenlänge in der Regel höher ist als bei längerer Wellenlänge, also geringere Leistungen benötigt werden.

Der Absorptionsgrad der absorbierenden Komponente bzw. Domäne sollte > 70 %, bevorzugt > 80 % und besonders bevorzugt > 90 % sein. Der Absorptionsgrad der transmittierten Komponente bzw. der Matrix sollte < 30 %, bevorzugt < 20 %, besonders bevorzugt < 10 % sein. Durch die unterschiedlichen Absorptionsgrade zwischen den Domänen und der Matrix ist gewährleistet, dass eine selektive Anregung erfolgt.

Als Matrix-Polymere, gegebenenfalls mit späterer (Nach-)Vernetzung, kommen bevorzugt Termoplaste, Elastomere und thermoplastische Elastomere in Frage.

Bei den Termoplasten kommen insbesondere in Frage Polyolefine und deren Copolymere (PE, PP, COC, EVA, EMA EEA, EBA, PS, SB, ABS, SAN, ASA, PVC, Ionomere, etc.), Polycarbonat, Polyester (PET, PBT, PTT), Polyamide (PA 4, 6, 6.6, 11, 12 etc.), Polyurethane, Polysiloxane, Poly(meth)acrylate, Fluorpolymere (FEP, PFA, PTFE, PVDF), Polyoxymethylene, insbesondere aber PE, PP, PET und deren Copolymere sowie weitgehend homogene Mischungen davon. Bei den Elastomeren kommen insbesondere in Frage Naturkautschuk, Polybutadien (BR), Polyisopren, Styrol-Butadien, Fluorkautschuk, Butadien-Acrylnitril-Copolymerw (NBR), Siliconkautschuk sowie weitgehend homogene Mischungen davon. Die Elastomere können vulkanisiert oder anders vernetzt sein. Bei den thermoplastischen Elastomeren eignen sich insbesondere TPE-E, TPE-O, TPE-U, SEBS, EPDM, PEBA, sowie weitgehend homogene Mischungen davon.

Als Inselpolymere kommen grundsätzlich die vorgenannten Polymere in Frage. Dabei sind Beispiele für nicht verträgliche Mischungen: PP/PA, PP/PS, PP/PVS, PP/SAN, PP/EPDM, PBT/PP, PP/PC, PP/TPE-U, PE/PA, PE/PS und PE/Ionomere.

Die vorgenannten Matrix-Polymere eignen sich im übrigen grundsätzlich auch bei Folie mit magnetischen oder metallischen Domänen, die durch Induktion angeregt werden.

Neben den vorgenannten Polymeren und funktionellen Additiven sowie den Domänen können weitere Additive für sich oder in Kombination in dem Folienmaterial enthalten sein:
- Weichmacher
- Lichtstabilisatoren
- UV-Absorber
- Pigmente und Farbstoffe
- Antioxidantien
- Metalldesaktivatoren, denen vorliegend besonders große Bedeutung zukommen kann
- Gleitmittel, Verarbeitungshilfsmittel
- Füllstoffe
- Treibmittel
- Verstärkungsmittel wie Fasern
- Compatibilizer

Bei einer alternativen Ausführungsform ist vorgesehen, dass die Domänen durch Ultraschall angeregt werden und dass das Folienmaterial durch ein Schallfeld hindurchgeführt wird. Dabei ist das Schallspektrum einer die Schallwellen erzeugenden Schalleinrichtung als Aktivierungseinheit derart eingestellt, dass das Material der Domänen stärker schwingen als die die Domänen umgebenden Bereiche. Dementsprechend hat das Material bzw. haben die Inhaltsstoffe der Domänen ein anderes Schwingverhalten als das Matrixmaterial bzw. das der die Domänen umgebenden Bereiche. Die Frequenz bei der Ultraschallanregung sollte größer 20 kHz sein, bevorzugt zwischen 20 und 100 kHz liegen.

Durch Auswahl entsprechender Parameter ist die Porengröße durch das erfindungsgemäße Verfahren in weiten Bereichen gezielt einstellbar. Sie reicht von 1 bis 1.000.000 nm, gegebenenfalls auch darunter, bevorzugt von 10 bis 100.000 nm. So liegt die Porengröße beispielsweise bei Batterieseparatoren/Brennstoffzellenmembranen zwischen 10 nm bis 1.000 nm und bei atmungsaktiven Membranen, insbesondere zur Anwendung im Baubereich, zwischen 100 nm bis 10.000 nm.

Die Porendichte kann im wesentlichen dadurch eingestellt werden, wie viel Inselmaterial bzw. wie viele Domänen vorliegen und wie diese in der Matrix verteilt sind. Bei Füllstoffen sind in diesem Zusammenhang bedeutsam die Partikelgröße und der Füllgrad sowie die Dispersionsgüte. Bei Polymeren, die Domänen bilden, ist von Bedeutung insbesondere der Anteil an der Gesamtrezeptur, die Viskosität und die Oberflächenspannung im Vergleich mit der Matrix sowie das Dispergierverfahren, denn hier wird das Inselmaterial zerkleinert und in der Matrix verteilt.

Als Kenngrößen für atmungsaktive Membranen werden für die Porendichte die Wasserdampfdurchlässigkeit und für die obere Porengröße die Wasserdichtigkeit herangezogen. Die Wasserdichtigkeit (gemessen nach EN 1928:2001, jedoch ohne Unterstützung der Folie) variiert je nach Anwendung, liegt aber bei Membranen für Dach- und Fassadenkonstruktionen bei größer 10 cm, bevorzugt größer 20 cm und besonders bevorzugt größer 1 m. Der obere Grenzwert der Wasserdichtigkeit wird bei dünnen Membranen dagegen oft von deren Maximalreißkraft und nicht von der Porengröße bestimmt und ist deshalb hier nicht angegeben. Auch die Wasserdampfdurchlässigkeit (gemessen nach DIN 1931 (23°C, 0 bis 75 Gew.-% relative Feuchte)) variiert je nach Anwendung, beträgt aber bei atmungsaktiven Membranen für Dach- und Fassadenkonstruktionen 10 bis 3.000 g/(m²*24h), bevorzugt 100 bis 2.500 g/(m²*24h), und besonders bevorzugt 200 bis 2.000 g/(m²*24h).

Um die Porengröße möglichst einheitlich zu gestalten, sollte die Größenverteilung der Domänen relativ eng sein. Dies bedeutet, dass die Domänen eine zumindest im wesentlichen einheitliche Größe haben sollten. Dies gilt sowohl für die magnetischen und metallischen Partikel, damit diese die gleiche Anregbarkeit haben, wie auch für die Inseldomänen in den unverträglichen Blends und die Treibmittelpartikel bzw. -coatings. Grundsätzlich können die Domänen eine maximale Größe bis etwa zur Dicke der Folie haben. Ihre Größe richtet sich danach, ob viele kleine Poren entstehen sollen oder solche, wo sich um die Domäne herum nur ein kleiner Spalt öffnet.

Beispiele für bevorzugte Partikelgrößen von bestimmten Einsatzstoffen sind:
- Beispiele für magnetische Partikel: AdNano (nanoskalige SiliziumdioxidPartikel mit Domänen aus modifizierten Eisenoxiden): < 1.000 nm, bevorzugt < 500 nm, besonders bevorzugt zwischen 2 - 100 nm. Hierdurch wird die beste Wirtschaftlichkeit der induktiven Anregung gewährleistet. Aber auch andere Dimensionen sind geeignet, wie beispielsweise Magnif der Fa. Minelco im Bereich zwischen 1 - 100 µm, bevorzugt 10 - 60 µm.
- Beispiele für metallische Partikel: z.B. Pigmentpulver der Fa. Eckart mit einer mittleren Teilchengröße zwischen 1 - 200 µm oder Nano Fe/Ni Powder der Fa. NTP mit einer Teilchengröße zwischen 5-15 nm.
- Die Bereiche für Infrarot anregbare Partikel liegen zwischen 1 - 100.000 nm, bevorzugt zwischen 10 - 10.000 nm und besonders bevorzugt zwischen 100 - 1.000 nm.
- Die Bereiche für Inseldomänen liegen zwischen 10 - 1.000.000 nm, bevorzugt zwischen 100 - 100.000 nm und besonders, bevorzugt zwischen 200 - 10.000 nm.
- Die Bereiche für die sich zersetzenden Treibmittel müssen kleiner sein, da das entstehende Gas für entsprechend größere Poren sorgt. Die Bereiche liegen zwischen 1 - - 5.000 nm, bevorzugt zwischen 10 - 1.000 nm und besonders bevorzugt zwischen 100 - 500 nm.
- Bei den verdampfenden Coatings entsteht deutlich weniger Gas. Dies führt zu einer nicht so starken Vergrößerung der Poren, so dass "normale Partikel" eingesetzt werden können. Die Bereiche liegen zwischen 1 - 100.000 nm, bevorzugt zwischen 10 - 10.000 nm und besonders bevorzugt zwischen 100 - 1.000 nm.

Die Folie selbst sollte eine Dicke von kleiner 1 mm haben. Bevorzugt sind Bereiche zwischen 1 µm und 300 µm, besonders bevorzugt sind Bereiche zwischen 10 µm und 100 µm.

Wie zuvor erwähnt, stellt die Anzahl der Domänen bzw. der Füllgrad einen wesentlichen Einflußfaktor für die Porendichte dar. Bei magnetischen und metallischen sowie elektrisch leitfähigen Füllstoffen sollte der Füllgrad zwischen 0,1 und 70 Gew.-%, bevorzugt zwischen 1 und 60 Gew.-%, besonders bevorzugt zwischen 2 und 50 Gew.-% und weiter bevorzugt zwischen 5 bis 30 Gew.-% liegen. Bei Verwendung von Treibmittel als solchem liegt der Füllgrad zwischen 0,01 und 20 Gew,-%, bevorzugt zwischen 0,2 und 10 Gew.-% und besonders bevorzugt zwischen 0,5 und 5 Gew.-%. Bei Füllstoffen mit Treibmittel oder auch nur mit im wesentlichen verdampfendem Coating liegt der Füllgrad zwischen 0,1 und 60 Gew.-%, bevorzugt zwischen 0,5 und 40 Gew.-% und besonders bevorzugt zwischen 1 und 20 Gew.-%. Bei IR-absorbierenden Füllstoffen liegt der Füllgrad zwischen 0,1 bis 80 Gew.-%, bevorzugt 1 bis 60 Gew.-%, besonders bevorzugt 2 bis 50 Gew.-% und weiter bevorzugt zwischen 5 und 30 Gew.-%. Bei Inselpolymeren liegt der Füllgrad zwischen 0,5 und 40 Gew.-%, bevorzugt zwischen 2 und 30 Gew.-% und besonders bevorzugt zwischen 5 und 20 Gew.-%.

Es wird darauf hingewiesen, dass die vorstehenden und auch die nachfolgenden Bereichsangaben alle Einzelwerte und auch Zwischenbereiche umfassen, die in den Bereichsgrenzen enthalten sind, auch wenn die Einzelwerte und Zwischenbereiche im einzelnen nicht erwähnt sind.

Nachfolgend werden Ausführungsbeispiele der Erfindung anhand der Zeichnung erläutert. Dabei zeigt
- Fig. 1: eine Prinzipskizze einer Produktionsanlage zur Herstellung poröser Folien,
- Fig. 2: eine Prinzipdarstellung eines Teils einer Folie vor und nach einer Anregung und einer Verstreckung,
- Fig. 3: eine Prinzipdarstellung eines Teils einer weiteren Folie vor und nach einer Anregung und einer Verstreckung,
- Fig. 4: eine Prinzipdarstellung eines Teils einer weiteren Folie vor und nach einer Anregung,
- Fig. 5: eine Prinzipdarstellung eines Teils einer weiteren Folie vor und nach einer Anregung und Verstreckung,
- Fig. 6: eine Prinzipdarstellung eines Teils einer weiteren Folie vor und nach einer Anregung und Verstreckung,
- Fig. 7: eine Prinzipdarstellung eines Teils einer weiteren Folie vor und nach einer Anregung und einer weiteren Verstreckung,
- Fig. 8: eine Prinzipdarstellung eines Teils einer weiteren Folie vor und nach einer Anregung und einer Verstreckung und
- Fig. 9: eine Prinzipdarstellung eines Teils einer weiteren Folie vor und nach einer Anregung.

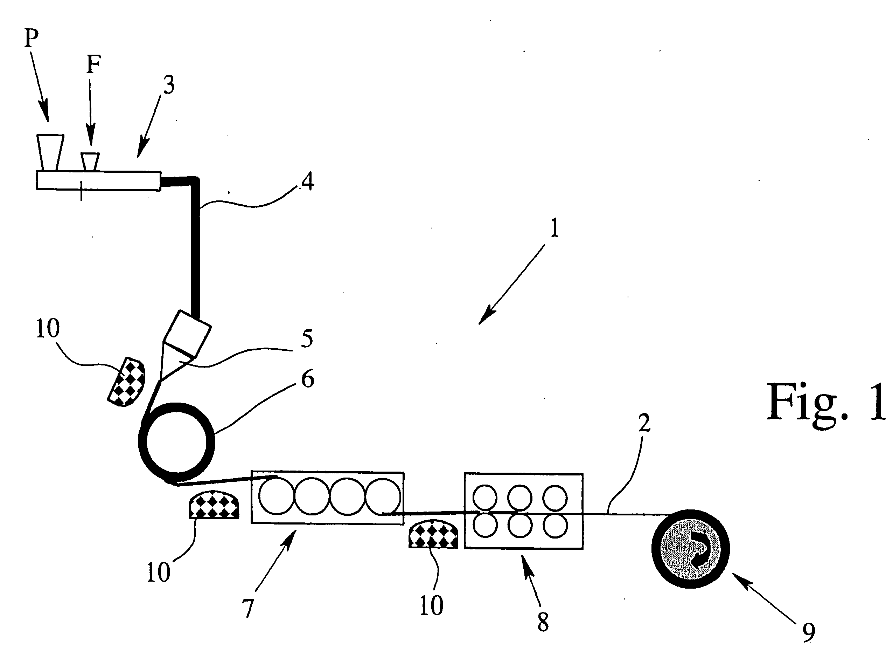

In Fig. 1 ist eine Vorrichtung 1 zur Herstellung poröser Folien 2 dargestellt. Bei der Folie 2 handelt es sich um eine Cast- oder Gießfolie. Die Vorrichtung 1 weist einen Extruder 3 auf, dem Polymere P und Füllstoffe F zugeführt werden. Die Polymere P bilden später die Matrix M, während die Füllstoffe F die Domänen D bilden, Im Extruder 3 findet eine Vermischung und Homogenisierung des zugeführten Materials statt. Dieses Material wird über eine Zuführleitung 4 einer Breitbanddüse 5 zugeführt. Das aus der Düse 5 kommende Flachmaterial wird über eine Gießwalze 6 gefördert. Die Gießwalze 6 dient aber nicht nur zum Abtransport, sondern vorliegend auch zur Temperierung der Folie 2. Im übrigen versteht es sich, dass statt einer Gießwalze 6 auch eine Mehrzahl von Gießwalzen oder andere Fördereinrichtungen vorgesehen sein können. Im Anschluss an die Gießwalze 6 wird die Folie 2 der Vorwärmeinrichtung 7 zugeführt. Die Vorwärmeinrichtung 7 kann eine Mehrzahl von temperierten Walzen oder z.B. eine temperierte Kammer aufweisen. Im Anschluss an die Vorwärmeinrichtung 7 wird die Folie einem Streckwerk 8 zugeführt. Vorliegend handelt es sich um ein monoaxiales Streckwerk 8, wenngleich auch eine biaxiale Streckung möglich ist. Nach dem Streckwerk 8 wird die Folie 2 einer Aufwickeleinrichtung 9 zugeführt.

Bei der dargestellten Vorrichtung 1 befinden sich jeweils zwischen der Düse 5 und der Gießwalze 6, der Gießwalze 6 und der Vorwärmeinrichtung 7 sowie der Vorwärmeinrichtung 7 und dem Streckwerk 8 eine Aktivierungseinheit 10. Die Fig. 1 verdeutlicht dabei lediglich unterschiedliche Anordnungsalternativen der Aktivierungseinheit 10, wobei es grundsätzlich sogar möglich ist, zwischen dem Streckwerk 8 und der Aufwickeleinrichtung 9 ebenfalls eine Aktivierungseinheit 10 vorzusehen. Wenngleich es grundsätzlich möglich ist, mehrere Aktivierungseinheiten 10 für eine Vorrichtung 1 zu haben, reicht es in der Regel aus, wenn lediglich eine Aktivierungseinheit 10 vorgesehen ist.

Im übrigen versteht es sich, dass die Erfindung nicht auf die Erstellung von Gießfolien beschränkt ist. Die Erfindung bezieht sich in gleicher Weise auf Folien jeglicher Herstellungsart. Dabei kann es sich z.B. um Blasfolien handeln, oder um solche, die durch Verfilmen von Dispersionen oder Lösungen erhalten worden sind. Bei der nach dem erfindungsgemäßen Verfahren hergestellten Folie kann es sich auch um eine koextrudierte Folie aus mehreren gegebenenfalls verschiedenen Schichten handeln. Eine vorgeschaltete Verstreckung zur Erhöhung der Grundfestigkeit ist denkbar. Die Erfindung lässt sich aber auch bei anderen Verfahren einsetzen. Elastomerfolien können z.B. auf Mischern und Kalandern unter Anwendung des erfindungsgemäßen Verfahrens produziert werden. Die so erhaltene perforierte Folie kann allein oder in Kombination mit weiteren Lagen eingesetzt werden. Dies sind z.B. Verstärkungslagen oder Schutzschichten. Die Folie wird dabei nach an sich bekannten Verfahren wie Kaschieren, Laminieren oder Verschweißen weiter verarbeitet. Die Folie kann auch vor dem Aktivieren schon mit mindestens einer weiteren Lage verbunden sein, z.B. durch Extrusionsbeschichtung, Kaschieren, Laminieren oder Verschweißen. Die Anregung erfolgt dann am Verbund selbst, wobei der Folienteil oder die Folienteile des Verbunds in gleicher Weise wie oben beschrieben erwärmt werden,

Im übrigen bezieht sich die vorliegende Erfindung nicht nur auf die nach dem erfindungsgemäßen Verfahren hergestellte Folie als solche, sondern insbesondere auch auf das aus der Folie hergestellte Folienmaterial und die daraus hergestellten Teile.

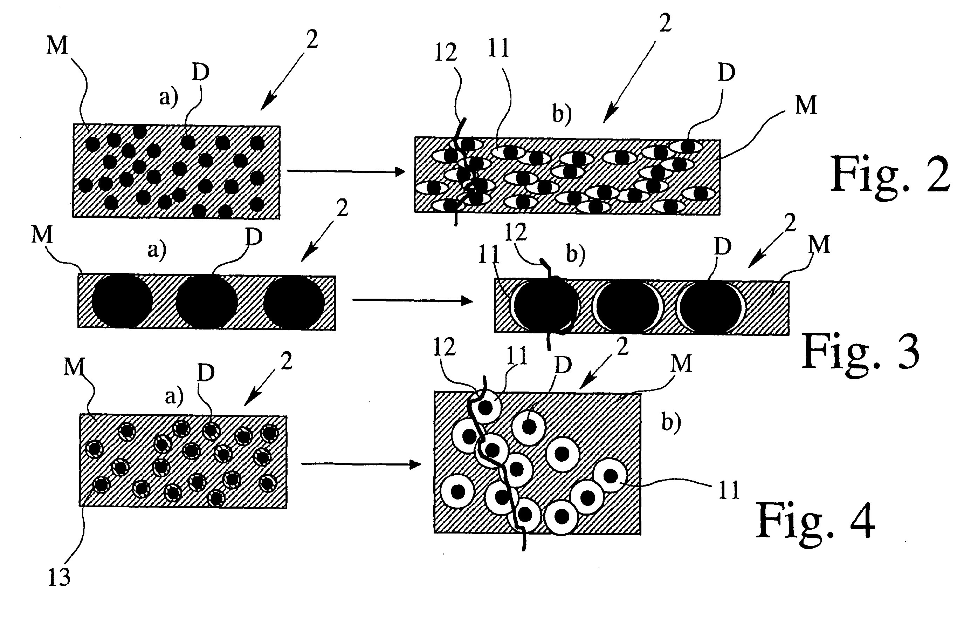

In den Fig. 2 bis 9 sind verschiedene Teilprinzipien der vorliegenden Erfindung dargestellt, auf die nachfolgend Bezug genommen wird. Dabei fasst die nachfolgende Tabelle die Prinzipien bzw. Teilprinzipien wie folgt zusammen:

| Prinzip / Anregung | | Teilprinzip |
|---|---|---|
| | | |
| Induktive Anregung | 1.1 | magnetische od. metallische Partikel und Verstreckung |
| | 1.2 | magnetische od. metallische Partikel und Treibmittel |
| | 1.3 | magnetische od. metallische Partikel und verdampfendes Coating |
| | 1.4 | Sonderfälle: leitfähige Polymere, Carbon-Nanoröhren, Kohlefasern sowie piezoelektrische Materialien |
| | | |
| Strahlungs-, insbesondere Infrarot- Anregung oder Ultraschallanregung | 2.1 | Absorbierender Füllstoff und transparente Matrix |
| | 2.2 | Mischung unverträgliche Polymere von denen eines IR-absorbierend ist |
| | 2.3 | Mischung unverträglicher Polymere, von denen eines absorbierend eingefärbt oder pigmentiert ist |
| | 2.4 | Absorbierendes Treibmittel und transparente Matrix |

Hinzuweisen ist darauf, dass in der vorstehenden Tabelle nur besonders bevorzugte Prinzipien der Anregung durch elektromagnetische Wellen angegeben sind.

In den Fig. 2 und 3 ist das Teilprinzip 1.1 dargestellt. Dabei zeigt Fig. 2a einen Teil einer Folie 2 vor der Anregung und Verstreckung schematisch. Die Folie 2 weist eine Matrix M aus Kunststoff und eine Vielzahl kleiner Domänen D auf. Bei den Domänen D handelt es sich um magnetische Partikel, deren Dicke kleiner ist als die Dicke der Folie 2. Demgegenüber ist in Fig. 3a eine Folie 2 dargestellt, bei der die Domänen D eine Dicke bzw. einen Durchmesser aufweisen, der der Dicke bzw. den Durchmesser der Folie 2 zumindest im wesentlichen entspricht.

In den Fig. 2b und 3b ist der Zustand der Folie 2 nach der Anregung und Verstreckung dargestellt. Insbesondere die Fig. 2b zeigt, dass die Dicke der Folie 2 nach der Verstreckung abgenommen hat. Durch die Verstreckung haben sich an den Grenzflächen der Domänen D Hohlräume 11 gebildet, und zwar in Verstreckungsrichtung. Durch eine entsprechend große Verstreckung ergibt sich ein Ablösen der Folie 2 im von den Domänen D Bereich der Hohlräume 11. Dabei bilden sich dann Poren 12, von denen eine schematisch dargestellt ist. Die Poren 12 ergeben sich dann über die Verbindung der einzelnen Hohlräume 11 der Domänen D.

Während eine relativ große Verstreckung bei der Ausführungsform gemäß Fig. 2 vorgenommen worden ist, ist bei der Ausführungsform gemäß Fig. 3 eine demgegenüber nur geringe Dehnung oder Verstreckung vorgenommen worden. Auch in diesem Falle ergeben sich an den Grenzflächen der Domänen D Poren 12.

Im Zusammenhang mit der induktiven Anregung von magnetischen Domänen D und anschließender Verstreckung sind Versuche durchgeführt worden. Dabei wurden auf einem Doppelschneckenextruder 65 Gew.- % Magnetit mit einer mittleren Teilchengröße von 10 µm in 35 Gew.-% Polypropylen Copolymer dispergiert, ausgetragen, abgekühlt und granuliert. Eine Mischung aus 37 Gew.-% dieses Granulats, 61 Gew.-% Polypropylen Copolymer und 2 Gew.-% Stabilisator-Konzentrat wurde mit Hilfe eines Einschnecken-Extruders zu einer Folie von 50 g/m² gegossen. Die Folie wurde im Anschluss bei einer Geschwindigkeit von 15 m/min mittels mehrerer beheizter Walzen auf 125 °C vorgewärmt und die magnetischen Partikel mittels Induktion bei 80 kHz und mit einer Leistung von 125 kW selektiv aufgeheizt. Anschließend erfolgte eine monoaxiale Verstreckung um den Faktor 1,5 zu einer Folie von etwa 35 g/m². Nach dem Abkühlen wurde eine Wasserdichtigkeit von 1,3 m Wassersäule und eine Wasserdampfdurchlässigkeit von 220 g/(m²*24h) gemessen.

In Fig. 4 ist das Teilprinzip 1.2 dargestellt. Dabei zeigt Fig. 4a einen Teil einer Folie 2, die im wesentlichen der Ausführungsform gemäß Fig. 2a entspricht, wobei die Domänen D jedoch eine Beschichtung 13 mit einem Treibmittel aufweisen. Nach Anregung zersetzt sich das Treibmittel und es ergeben sich vergleichsweise große Hohlräume 11 um die einzelnen Domänen D. In diesem Fall kann sich bereits eine Porosität bzw. Poren 12 dadurch ergeben, dass einzelne Hohlräume 11 ineinander übergehen und sich so von der Ober- zur Unterseite erstreckende Poren 12 ergeben. Das entstehende Gas bläht die demnach die Folie um die Domänen herum auf, so dass sich eine größere Dicke der Folie 2 in 4 b gegenüber 4a ergibt.

Die in Fig. 4b ausschnittweise dargestellte Folie 2, kann, was nicht dargestellt ist, anschließend noch verstreckt werden, so dass sich eine weitere Erhöhung der Porosität ergibt. Dabei nimmt dann die Dicke der Folie 2 wieder ab.

Auch im Zusammenhang mit der induktiven Anregung von magnetischen Partikeln, die mit Treibmittel beschichtet sind, ist ein Versuch durchgeführt worden. Dabei wurden 100 g Azodicarbonamid in siebendem Dimethylformamid (DMF) aufgelöst. In der Lösung wurden 1.000 g Magnetit mit einer mittleren Teilchengröße von 0,5 µm dispergiert, das DMF unter ständigem Rühren abgekühlt, im Vakuum weitgehend abdestilliert und die erkaltete Mischung filtriert. Bei dem pulvrigen Rückstand handelte es sich um mit Treibmittel ummantelte magnetische Partikel. Diese wurden auf einem Doppelschneckenextruder mit dem 20-fachen eines Polypropylen Random-Copolymers dispergiert und zu einer Primärfolie von 85 g/m² gegossen. Die Folie wurde im Anschluss bei einer Geschwindigkeit von 15 m/min mittels mehrerer beheizter Walzen auf 135 °C vorgewärmt, die magnetischen Partikel bzw. Domänen mittels Induktion bei 80 kHz und mit einer Leistung von 125 kW selektiv aufgeheizt und die Folie um den Faktor 1,1 in beide Richtungen biaxial verstreckt. Dabei zersetzte sich das Azodicarbonamid, so dass eine offenzellige Folie entstand. Nach dem Abkühlen wurde eine Wasserdichtigkeit von 0,6 m Wassersäule und eine Wasserdampfdurchlässigkeit von 358 g/(m²*24h) gemessen.

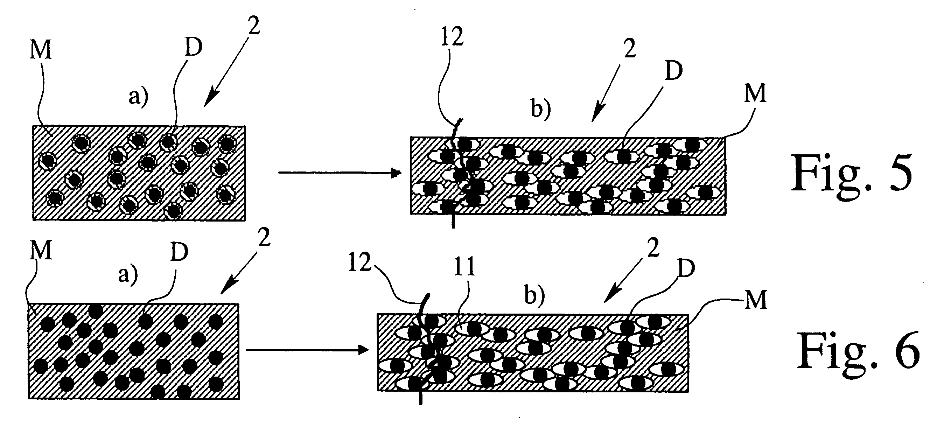

Fig. 5 zeigt das Teilprinzip der Verwendung von magnetischen Domänen D, die mit einer verdampfenden Beschichtung 13 bzw. einem Coating versehen ist (Teilprinzip 1.3). Nach Anregung und Verstreckung ergibt sich eine Folie 2, die der gemäß Fig. 2b sehr ähnelt.

Im Zusammenhang mit einem auf diesem Prinzip beruhenden Versuch wurden 1.000 g mit Siliziumdioxid beschichtete Aluminiumpigmente (STAPA IL Hydrolan 701 der Fa. Eckart mit einem D50 von 16 µm) wurden in Benzin gewaschen und filtriert. Der Rückstand wurde in flüssiger Stearinsäure dispergiert. Nach dem Filtrieren erfolgte analog der im Zusammenhang mit Fig. 2 beschriebenen Ausführungsform die Einarbeitung in Polyethylen niedriger Dichte, so dass 40 Gew.-% gecoatete Pigmente im Kunststoff enthalten waren. Die anschließende Extrusion über eine Blasfolienanlage lieferte eine Primärfolie von 30 g/m². Die Folie wurde nach Aufschneiden und Flachlegen des Schlauchs bei einer Geschwindigkeit von 45 m/min mittels mehrerer beheizter Walzen auf 85 °C vorgewärmt und die magnetischen Partikel mittels Induktion bei 3 GHz und mit einer Leistung von 92 kW selektiv aufgeheizt, wodurch die Stearinsäure zum Teil verdampfte. Anschließend erfolgte eine monoaxiale Verstreckung um den Faktor 2 zu einer Folie von etwa 15 g/m². Nach dem Abkühlen wurde eine Wasserdichtigkeit von 0,2 m Wassersäule und eine Wasserdampfdurchlässigkeit von 1.050 g/(m²*24h) gemessen.

In Fig. 6 ist das Prinzip der Infrarot-Aktivierung bei Verwendung eines absorbierenden Füllstoffs als Domänen D in einer transparenten Matrix M gemäß Teilprinzip 2.1 dargestellt. Von der schematischen Ansicht her entspricht dies der Fig. 2. Bei einem diesbezüglichen Versuch wurden 35 Gew.-% Kreide (Omyafilm 704 der Fa. Omya mit einem D50 von 2 µm) und 65 Gew.-% Polybutylenterephthalat (PBT, Ultradur 4500 der Fa. BASF) in einem Doppelschneckenextruder gemischt und das PBT wurde aufgeschmolzen. Nach der Extrusion zu einer Gießfolie von 55 g/m² wurde diese mit einem IR-Strahler und vorgeschaltetem Filter bestrahlt, so dass die Kreide selektiv erhitzt wurde. Dabei bildete sich eine Trennschicht um die Kreidepartikel. Eine monoaxiale Verstreckung um den Faktor 1,2 lieferte eine atmungsaktive Folie mit einem Flächengewicht von 46 g/m² mit einer Wassersäule von > 1,5 m und einer Wasserdampfdurchlässigkeit von 175 g/(m²*24h). Die Folie wurde anschließend auf beiden Seiten mit je einem Polyesterspinnvlies von 55 g/m² diskontinuierlich mit einem Hotmelt klebkaschiert. Die Wassersäule blieb unverändert, von der Wasserdampfdurchlässigkeit verblieben 160 g/(/m²*24h). Dieser Verbund konnte als Dachunterspannbahn und als Fassadenbahn verwendet werden.

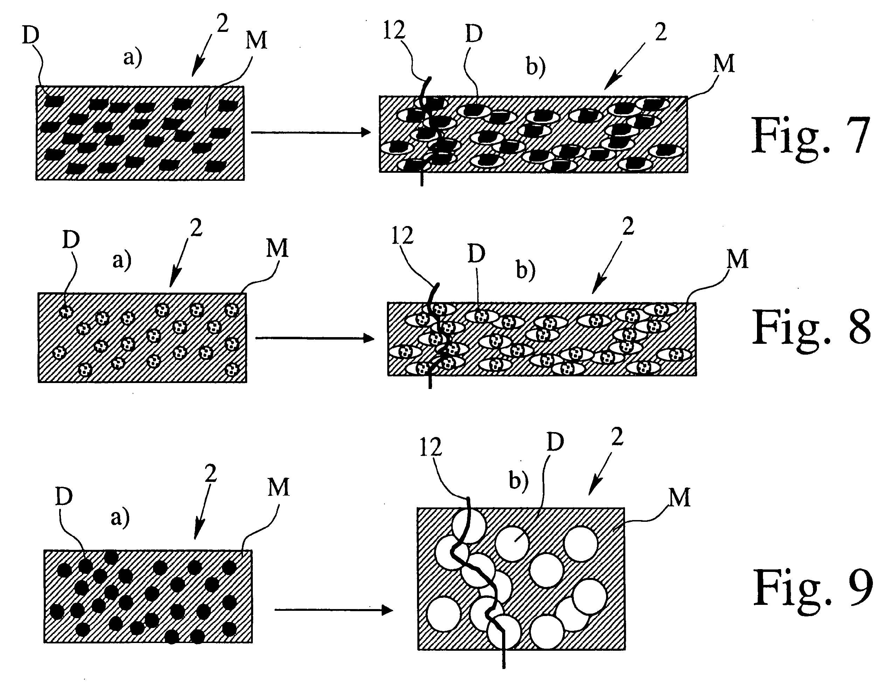

In Fig. 7 ist das Teilprinzip 2.2 schematisch dargestellt. Die Folie 2 weist eine Mischung unverträglicher Polymere auf, wobei die IR-Strahlung absorbierende Polymere als Inselpolymere die Domänen D bilden. Die anderen Polymere bilden die Matrix M. Nach IR-Aktivierung und anschließender Verstreckung ergeben sich Verhältnisse wie bei Fig. 2b.

In Fig. 8 ist das Teilprinzip 2.3 dargestellt. Die Domänen D werden dabei von Polyeren gebildet, die absorbierend eingefärbt oder pigmentiert sind. Die anderen Polymere bilden die Matrix M. Bei einem diesbezüglich durchgeführten Versuch wurde ein Compound von 30 5 Gew.-% Ruß in 95 Gew.-% Polystyrol eingesetzt (Plasblak PS 0469 der Fa. Cabot). In einem weiteren Schritt wurden 16 Gew.-% des vorbehandelten Polystyrols mit 82 Gew.-% Polypropylen auf einem Doppelschneckenextruder compoundiert und zu einer Folie von 40 g/m² gegossen. Bei einer Untersuchung zeigte sich, dass die mittlere Größe der länglichen Polystyrolinseln bei ca. 5 µm liegt und der Ruß fast vollständig in dem Polystyrol verblieben ist. Nach einer Vorwärmung auf 115 °C erfolgt die die selektive Erhitzung der rußhaltigen Polystyrol-Inseln mit NIR-Strahler, wobei die Wellenlänge der gefilterten Strahlung bei etwa 0,8 - 2,1 µm lag. Die Leistung betrug 4 kW/m2. Anschließend erfolgte eine Verstreckung um den Faktor 1,25. Nach dem Abkühlen wurde eine Wasserdichtigkeit von 1,1m Wassersäule und eine Wasserdampfdurchlässigkeit von 315 g/(m²*24h) gemessen.

In Fig. 9 ist das Prinzip 2.4 dargestellt, bei dem die Domänen D durch IRabsorbierendes Treibmittel gebildet sind, während die Matrix M weitgehend IRtransparent ist. Nach der Anregung stellen die Domänen D Hohlräume 11 dar, die miteinander kommunizieren können und dadurch Poren 12 bilden. Bei einem diesbezüglichen Versuch wurden 1,5 Gew.-% 1,5 Gew.-% Azodicarbonamid in 98,5 % LDPE compoundiert und aus einer Breitschlitzdüse ausgetragen, wobei die Massetemperatur 190 °C nicht überstieg. Die Schmelze wurde auf einer temperierten Vorgießwalze auf 110 °C abgekühlt. Beim anschließenden Vorbeiführen an einem IR-Strahler wurde das Azodicarbonamid gezündet, wodurch sich eine atmungsaktive Folie ergab. Nach dem Abkühlen wurde eine Wasserdichtigkeit von 0,25 m Wassersäule und eine Wasserdampfdurchlässigkeit von 630 g/(m²*24h) gemessen.

Bei einem ähnlichen Versuch wurde statt reinem Azodicarbonamid ein mit Azodicarbonamid gecoatetes nanoskaliges Siliziumdioxid verwendet. Beim Zünden des Treibmittelcoatings entstanden sehr kleine Poren von < 900 nm.

### Bezugszeichenliste

- 1: Vorrichtung
- 2: Folie
- 3: Extruder
- 4: Zuführleitung
- 5: Düse
- 6: Gießwalze
- 7: Vorwärmeinrichtung
- 8: Streckwerk
- 9: Aufwickeleinrichtung
- 10: Aktivierungseinheit
- 11: Hohlraum
- 12: Poren
- 13: Beschichtung

- D: Domäne
- F: Füllstoff
- M: Matrix
- P: Polymere

## Patentansprüche

1. Verfahren zur Herstellung poröser Folien (2), wobei die Folie (2) eine Matrix (M) aus Kunststoff aufweist, wobei in der Matrix (11) im wesentlichen diskrete Domänen (D) vorgesehen sind, wobei die Folie (2) einem Feld zur selektiven Anregung der Domänen (D) ausgesetzt wird, wobei die Domänen (D) relativ zum Rest der Matrix (11) durch die Anregung selektiv erwärmt werden und wobei die Poren (12) in den Domänen (D) oder im Bereich der Domänen (D) erzeugt werden,
**dadurch gekennzeichnet,**
**dass** die Folie (2) während oder nach der Anregung verstreckt wird und dass die Größe der Poren (12) im Folienmaterial durch den Grad der Verstreckung gesteuert wird.

2. Verfahren nach Anspruch 1, **dadurch gekennzeichnet, dass** die Domänen (D) derart in der Folie angeordnet werden, dass die Domänen (D) gleichmäßig in der Folie (2) verteilt sind.

3. Verfahren nach Anspruch 1 oder 2, **dadurch gekennzeichnet, dass** in oder auf den Domänen (D) ein Porenbildner vorgesehen ist, der sich durch die Erwärmung zersetzt und/oder verdampft.

4. Verfahren nach einem der vorhergehenden Ansprüche, **dadurch gekennzeichnet, dass** die Anregung im Feld kontaktlos erfolgt.

5. Verfahren nach einem der vorhergehenden Ansprüche, **dadurch gekennzeichnet, dass** die Domänen (D) durch Induktion angeregt werden und dass die Folie (2) durch ein Magnetfeld, ein elektrisches Feld und/oder ein elektromagnetisches Feld hindurchbewegt wird.

6. Verfahren nach einem der vorhergehenden Ansprüche, **dadurch gekennzeichnet, dass** die Domänen (D) durch Strahlung angeregt werden und dass die Folie (2) durch ein Strahlungsfeld hindurchbewegt wird.

7. Verfahren nach einem der vorhergehenden Ansprüche, **dadurch gekennzeichnet, dass** das Lichtwellenspektrum einer die Strahlung erzeugende Strahlungseinrichtung derart eingestellt wird, dass die Domänen (D) die Strahlung absorbieren, während die die Domänen (D) umgebenden Bereiche die Strahlung nicht oder nur zu einem geringeren Maße als die Domänen (D) absorbieren.

8. Verfahren nach einem der vorhergehenden Ansprüche, **dadurch gekennzeichnet, dass** die Domänen (D) durch Ultraschall angeregt werden und dass die Folie (2) durch ein Schallfeld hindurchbewegt wird und dass das Schallspektrum einer die Schallwellen erzeugenden Schalleinrichtung derart eingestellt wird, dass die Domänen (D) stärker schwingen, als die die Domänen (D) umgebenden Bereiche.

9. Verfahren nach einem der vorhergehenden Ansprüche, **dadurch gekennzeichnet, dass** die Größe und/oder Anzahl der Poren (12) im Folienmaterial durch die Art und Anzahl der Domänen (D), die Temperatur des Folienmaterials, den Zeitpunkt, die Dauer und die Intensität der Anregung und/oder die Menge des Treibmittels gesteuert wird.

10. Poröses Folienmaterial mit einer Matrix (M) aus Kunststoff, wobei in der Matrix (11) im wesentlichen diskrete Domänen (D) vorgesehen sind, wobei die Domänen (D) in einem Feld selektiv angeregt worden sind, so dass sich die Domänen (D) bereichsweise und/oder die den Domänen (D) benachbarten Bereiche erwärmt haben, und wobei die Poren (12) in den oder im Bereich der Domänen (D) vorgesehen sind,
**dadurch gekennzeichnet,**
**dass** die Folie (2) während oder nach der Anregung verstreckt worden ist und dass die Größe der Poren (12) im Folienmaterial durch den Grad der Verstreckung gesteuert worden ist.

11. Poröses Folienmaterial nach Anspruch 10, **dadurch gekennzeichnet, dass** in oder auf den Domänen (D) vor der ersten Anregung ein Treibmittel oder ein Coating vorgesehen ist, das sich durch die Anregung zersetzt oder verdampft und dass die Domänen (D) Füllstoffe (F) aufweisen, die mit dem Treibmittel oder dem Coating beschichtet sind oder dass die Domänen ausschließlich aus Treibmittel bestehen.

12. Poröses Folienmaterial nach einem der Ansprüche 10 oder 11, **dadurch gekennzeichnet, dass** die Domänen Füllstoffe (F) aufweisen, die ferro-, ferri-, para, und/oder superparamagnetisch und/oder elektrisch leitfähig und/oder piezoelektrisch sind und/oder die aus einem Infrarot-Strahlung absorbierenden Material bestehen, wobei das die Füllstoffe (F) umgebende Material aus einem nicht oder gegenüber den Füllstoffen (F) geringer IR-Strahlung absorbierendem Material bestehen.

13. Poröses Folienmaterial nach einem der Ansprüche 10 bis 12, **dadurch gekennzeichnet, dass** die Domänen (D) wenigstens zwei unverträgliche Kunststoffe aufweisen, wobei ein Kunststoff Infrarot-Strahlung mit einem vorgegebenen Wellenlängenbereich stärker absorbiert als der andere Kunststoff und/oder wobei ein Kunststoff wenigstens eine Infrarot-Strahlung mit einem vorgegebenen Wellenlängenbereich absorbierenden Komponente aufweist.

14. Poröses Folienmaterial nach einem der Ansprüche 10 bis 13, **dadurch gekennzeichnet, dass** das Treibmittel Infrarot-Strahlung absorbierend ist.

15. Poröses Folienmaterial nach einem der Ansprüche 10 bis 14, **dadurch gekennzeichnet, dass** die Domänen (D) aus einem Material bestehen, dass ein anderes Schwingverhalten als das Material der die Domänen (D) umgebenden Bereiche aufweist.

## Claims

1. Process for producing porous films (2), wherein the film (2) comprising a matrix (M) of plastic, wherein at least basically discrete domains (D) are provided in the matrix (11), wherein the film (2) is exposed to a field for selective excitation of the domains (D), wherein the domains (D) are, relatively to the remainder of the matrix (11), selectively heated by excitation, and wherein the pores (12) are produced in the domains (D) or in the area of the domains (D),
**characterized in**
**that** the film (2) is stretched during or after excitation and that the size of the pores (12) in the foil material is controlled by the degree of stretching.

2. Process according to claim 1, **characterized in that** the domains (D) are arranged in the film such that the domains (D) are homogeneously distributed in the film (2).

3. Process according to claim 1 or 2, **characterized in that** a pore former is provided in or on the domains (D), which is decomposed and/or vaporized by heating.

4. Process according to any one of the preceding claims, **characterized in that** the excitation in the field is performed contactless.

5. Process according to any one of the preceding claims, **characterized in that** the domains (D) are excited by induction and that the film (2) is moved through a magnetic field, an electric field and/or an electromagnetic field.

6. Process according to any one of the preceding claims, **characterized in that** the domains (D) are excited by radiation and that the film (2) is moved through a radiation field.

7. Process according to any one of the preceding claims, **characterized in that** the light wave spectrum of a radiation producing radiation device is set such that the domains (D) absorb the radiation, while the areas surrounding the domains (D) do not or only to a lesser extend absorb the radiation.

8. Process according to any one of the preceding claims, **characterized in that** the domains (D) are excited by ultrasound and that the film (2) is moved through a sound field and that the sound spectrum of a sound device producing the sound waves is set such that the domains (D) vibrate more strongly than the region surrounding the domains (D).

9. Process according to any one of the preceding claims, **characterized in that** the size and/or number of pores (12) in the film material is controlled by the type and number of domains (D), the temperature of the film material, the instant, the duration and the intensity of the excitation and/or the amount of propellant.

10. Porous film material with a matrix (M) of plastic, wherein at least basically discrete domains (D) are provided in the matrix (11), wherein the domains (D) have been selectively excited in a field such that the domains (D) have been heated areally and/or that the areas adjacent to the domains have been heated, and wherein the pores (12) are provided in or in the area of the domains (D),
**characterized in**
**that** the film (2) has been stretched during or after excitation and that the size of the pores (12) in the film material has been controlled by the degree of stretching.

11. Porous film material according to claim 10, **characterized in that** a propellant or coating is provided in or on the domains (D) prior to the first excitation which is decomposed or vaporized by the excitation, and that the domains (D) comprising fillers (F) which are coated with the propellant or the coating or that the domains (D) exclusively consisting of propellant.

12. Porous film material according to any one of claims 10 or 11, **characterized in that** the domains comprising fillers (F) which are ferro-, ferri-, para- and/or superparamagnetic and/or electrically conductive and/or piezo-electric and/or which consist of a material absorbing infrared radiation, wherein the material surrounding the fillers (F) consisting of a material that is not or, in relation to the fillers (F), to a lesser extend absorbing IR-radiation.

13. Porous film material according to any one of the claims 10 to 12, **characterized in that** the domains (D) comprising at least two incompatible plastics, wherein one plastic absorbs infrared radiation of a specific wavelength range to a higher extend than the other plastic and/or wherein one plastic comprises at least one component absorbing infrared radiation of a predefined wavelength range.

14. Porous film material according to any one of the claims 10 to 13, **characterized in that** the propellant is infrared-radiation absorbing.

15. Porous film material according to any one of the claims 10 to 14, **characterized in that** the domains (D) consisting of a material having a different vibration behavior than the material of the areas surrounding the domains (D).

## Revendications

1. Procédé de fabrication de films poreux (2), dans lequel le film (2) présente une matrice (M) de matière plastique, dans lequel des domaines (D) substantiellement discrets sont prévus dans la matrice (11), dans lequel le film (2) est exposé à un champ pour l'activation sélective des domaines (D), dans lequel les domaines (D) sont réchauffés par l'activation sélectivement par rapport au reste de la matrice (11), et dans lequel les pores (12) sont générés dans les domaines (D) ou au niveau des domaines (D),
**caractérisé en ce que** le film (2) est étiré pendant ou après l'activation, et **en ce que** la taille des pores (12) dans le matériau de film est régulée par le degré de l'étirage.

2. Procédé selon la revendication 1, **caractérisé en ce que** les domaines (D) sont disposés dans le film de telle sorte que les domaines (D) se répartissent régulièrement dans le film (2).

3. Procédé selon la revendication 1 ou 2, **caractérisé en ce que** dans ou sur les domaines (D), un agent porogène est prévu qui se décompose et/ou s'évapore sous l'effet de l'échauffement.

4. Procédé selon l'une quelconque des revendications précédentes, **caractérisé en ce que** l'activation dans le champ s'effectue sans contact.

5. Procédé selon l'une quelconque des revendications précédentes, **caractérisé en ce que** les domaines (D) sont activés par induction, et **en ce que** le film (2) est déplacé à travers un champ magnétique, un champ électrique et/ou un champ électromagnétique.

6. Procédé selon l'une quelconque des revendications précédentes, **caractérisé en ce que** les domaines (D) sont activés par rayonnement et **en ce que** le film (2) est déplacé à travers un champ de rayonnement.

7. Procédé selon l'une quelconque des revendications précédentes, **caractérisé en ce que** le spectre des ondes lumineuses d'un dispositif de rayonnement produisant le rayonnement est réglé de telle sorte que les domaines (D) absorbent le rayonnement alors que les zones entourant les domaines (D) n'absorbent pas le rayonnement ou seulement dans une mesure inférieure aux domaines (D).

8. Procédé selon l'une quelconque des revendications précédentes, **caractérisé en ce que** les domaines (D) sont activés par ultrason, et **en ce que** le film (2) est déplacé à travers un champ sonore, et **en ce que** le spectre sonore d'un dispositif sonore produisant les ondes sonores est réglé de telle sorte que les domaines (D) vibrent plus fortement que les zones entourant les domaines (D).

9. Procédé selon l'une quelconque des revendications précédentes, **caractérisé en ce que** la taille et/ou le nombre des pores (12) dans le matériau de film sont régulés par le type et le nombre des domaines (D), la température du matériau de film, l'instant, la durée et l'intensité de l'activation et/ou la quantité du porogène.

10. Matériau de film poreux, comprenant une matrice (M) de matière plastique, dans lequel des domaines (D) substantiellement discrets sont prévus dans la matrice (11), dans lequel les domaines (D) sont activés sélectivement dans un champ, de sorte que les domaines (D) par endroits et/ou les zones voisines des domaines (D) se sont réchauffés, et dans lequel les pores (12) sont prévus dans les domaines (D) ou au niveau de ceux-ci,
**caractérisé en ce que** le film (2) a été étiré pendant ou après l'activation, et **en ce que** la taille des pores (12) dans le matériau de film est régulée par le degré de l'étirage.

11. Matériau de film poreux selon la revendication 10, **caractérisé en ce que** dans ou sur les domaines (D), avant la première activation, un porogène ou une enduction est prévu(e) qui se décompose ou s'évapore sous l'effet de l'activation, et **en ce que** les domaines (D) présentent des charges (F) recouvertes du porogène ou de l'enduction, ou **en ce que** les domaines se composent exclusivement du porogène.

12. Matériau de film poreux selon l'une quelconque des revendications 10 ou 11, **caractérisé en ce que** les domaines présentent des charges (F) qui sont ferromagnétiques, ferrimagnétiques, paramagnétiques et/ou superparamagnétiques et/ou électriquement conductrices et/ou piézoélectriques et/ou qui se composent d'un matériau absorbant le rayonnement infrarouge, dans lequel le matériau entourant les charges (F) est composé d'un matériau n'absorbant pas le rayonnement IR ou dans une mesure inférieure aux charges (F).

13. Matériau de film poreux selon l'une quelconque des revendications 10 à 12, **caractérisé en ce que** les domaines (D) présentent au moins deux matières plastiques incompatibles, dans lequel une matière plastique absorbe le rayonnement infrarouge d'une gamme de longueurs d'onde prédéfinie plus fortement que l'autre matière plastique et/ou dans lequel une matière plastique présente au moins un composant absorbant le rayonnement infrarouge d'une gamme de longueurs d'onde prédéfinie.

14. Matériau de film poreux selon l'une quelconque des revendications 10 à 13, **caractérisé en ce que** le porogène absorbe le rayonnement infrarouge.

15. Matériau de film poreux selon l'une quelconque des revendications 10 à 14, **caractérisé en ce que** les domaines (D) se composent d'un matériau présentant un comportement vibratoire différent du matériau des zones entourant les domaines (D).
